# FASCICULE DE BREVET EUROPEEN

(11) **EP 2 536 590 B1**
(45) Date de publication et mention de la délivrance du brevet: **07.09.2016**
(21) Numéro de dépôt: 11703009.8
(22) Date de dépôt: 15.02.2011
(51) Int. Cl.: B60P 1/28, B60R 13/01

(54) **BENNE DE CAMION A PAROI DE FOND RECOUVERTE D'UNE BANDE SANS FIN D'AMORTISSEMENT, ET CAMION AINSI EQUIPE**
KIPPE EINES MULDENKIPPERS MIT BODENWAND MIT ÜBERZUG AUS EINEM STOSSDÄMPFENDEN ENDLOSBAND UND DAMIT AUSGESTATTETER LKW
DUMP TRUCK SKIP HAVING A BOTTOM WALL COVERED WITH A SHOCK-ABSORBING ENDLESS BELT, AND TRUCK THUS FITTED

(30) Priorité: 15.02.2010 FR 1051025
(43) Date de publication de la demande: 26.12.2012
(73) Titulaire: Sogetrap, 35250 Saint Médard Sur Ille (FR)
(72) Inventeur: LEMAITRE, Yannick, F-35410 Châteaugiron (FR)
(74) Mandataire: Regimbeau
(86) Numéro de dépôt international: PCT/EP2011/052175
(87) Numéro de publication internationale: WO 2011/098612

(56) Documents cités:
- EP-A1- 0 125 115
- EP-A1- 0 340 130
- EP-A2- 1 473 189
- FR-A1- 2 679 180
- US-A- 3 652 123

## Description

La présente invention se rapporte à une benne de camion ainsi qu'à un camion équipé d'une telle benne.

Un domaine d'application de l'invention est celui des véhicules pourvu d'une benne basculante, pour le transport de matériaux divers, par exemple granulaires ou sous forme de blocs, tels que des enrochements.

Dans le domaine particulier des carrières et des mines, des camions spécifiques, appelés "dumpers", possédant une benne de grande capacité, sont largement utilisés.

Ainsi, certains "dumpers" sont suffisamment dimensionnés pour recevoir 50 à 60 tonnes de charge dans la benne.

Le vidage du contenu de la benne est opéré par relevage de celle-ci, son extrémité avant étant le plus souvent dépourvue de paroi d'obturation.

Une telle benne est généralement formée d'un assemblage de tôle d'acier.

Lors du vidage, il s'opère des frottements importants entre les matériaux transportés et le fond de la benne de sorte que celui-ci s'abime très vite.

Pour palier à cette usure, il est courant de garnir le fond de la benne de tôle d'acier de renforcement, par exemple de 15 à 20 mm d'épaisseur.

Cette opération est renouvelée deux à trois fois au cours de la durée de vie de la benne.

On comprend aisément qu'une telle réparation est fastidieuse, coûteuse et consommatrice de temps.

Un autre inconvénient lié à cette pratique relève de la pollution sonore.

En effet, lors du remplissage de la benne, un bruit très important est généré.

Il en va de même lors du vidage de la benne par relevage de celle-ci.

Ce bruit peut gêner considérablement les riverains du site concerné.

Pour pallier ce dernier inconvénient, on a proposé de fixer sur le fond de la benne un revêtement en caoutchouc qui a pour avantage de réduire considérablement le bruit généré lors du remplissage de la benne et de son vidage. L'état de la technique en la matière peut être illustré par le document US-A-3652123. Toutefois, cette solution n'est pas satisfaisante dans la mesure où les impacts des matériaux tels que des enrochements sur le revêtement en caoutchouc provoquent une usure très rapide de celui-ci.

Dans les documents EP-A-0340130 et FR-A-2679180 sont décrits des systèmes de déchargement à bande transporteuse motrice.

La présente invention a pour but de pallier ces difficultés.

Ainsi, selon un premier aspect, la présente invention se rapporte à une benne de camion qui comporte au moins une paroi de fond, deux flancs longitudinaux et une paroi transversale avant, caractérisée par le fait qu'elle est pourvue d'un rouleau d'axe transversal, fou en rotation sur lui-même, sur lequel est montée, libre de coulissement, une bande sans fin en matériau amortisseur, qui couvre la totalité de la surface de la paroi de fond ou une partie substantielle de celle-ci.

Ainsi qu'on le verra plus loin, lorsque l'on relève la benne pour la vider, son passage progressif de sa position abaissée de transport à sa position de relevage provoque le déplacement de la bande sans fin qui entraîne avec elle le chargement, sans usure ou pratiquement sans usure de cette dernière.

Selon des caractéristiques avantageuses et non limitatives de cette benne :
- ledit rouleau est monté à proximité immédiate de la paroi de fond, dans sa région de raccordement avec la paroi transversale avant ;
- ledit rouleau est monté à proximité immédiate du bord supérieur de la paroi transversale avant ;
- elle comporte une "casquette", c'est à dire une paroi supplémentaire qui se raccorde au bord supérieur de la paroi transversale avant, dans une direction opposée à ladite paroi de fond, caractérisée par le fait que ledit rouleau est monté sur cette "casquette" ;
- elle est pourvue, dans la zone de raccordement de la "casquette" à la paroi transversale avant, d'au moins un rouleau transversal de renvoi, fou en rotation sur lui-même, sur lequel s'appuie et glisse le brin inférieur de ladite bande ;
- ladite bande sans fin est en caoutchouc ou à base de caoutchouc ;
- ladite bande comporte une armature en matière textile, prise en sandwich entre deux couches de caoutchouc ou à base de caoutchouc, dites externe et interne ;
- l'épaisseur de la couche externe est supérieure à celle de la couche interne.

La présente invention se rapporte également à un camion équipé d'une telle benne.

Avantageusement, la benne est relevable de sorte que, lorsque la benne contient un chargement, son passage progressif de sa position abaissée de transport, à sa position relevée de vidage provoque le déplacement de ladite bande sans fin, qui entraîne avec elle ledit chargement.

D'autres caractéristiques et avantages de la présente invention apparaîtront à la lecture de la description qui va suivre d'un mode de réalisation détaillé.

Cette description sera faite en référence aux dessins annexés, dans lesquels :
- La figure 1 est une vue simplifiée de côté d'un camion de type "dumper" couramment utilisé dans le domaine des carrières et des mines.
- La figure 2 est une vue en perspective d'une benne conforme à la présente invention.
- Les figures 3 et 5 sont des vues similaires de la benne de la figure 2, vu de côté, l'un de ses flancs étant absent, la benne étant représentée respectivement vide et chargée.
- La figure 4 est une vue partielle des deux brins qui constituent la bande sans fin équipant ladite benne.
- La figure 6 est une vue de dessus de la benne.
- La figure 7 est une vue analogue à la figure 5, la benne étant représentée, relevée, pour permettre le vidage de son chargement.
- La figure 8 est une vue en perspective de la benne selon l'invention, munie de son tapis.
- Enfin, la figure 9 est une vue très schématique de côté d'un autre mode de réalisation.

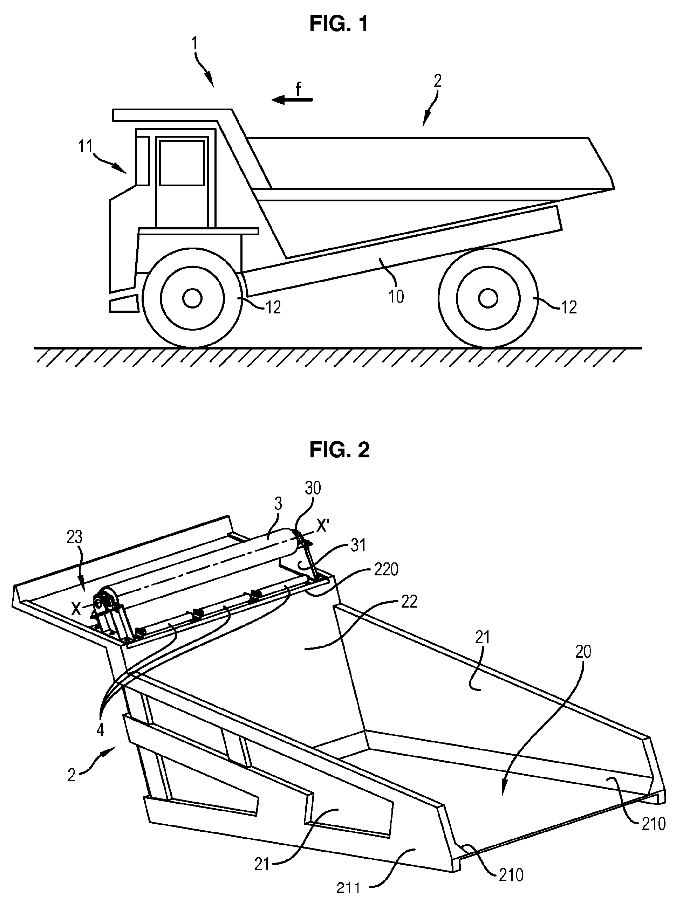

A la figure 1 est représenté un camion de type "dumper" qui est actuellement utilisé sur des sites de carrière ou encore de mine.

Ces camions présentent des dimensions importantes et permettent, comme dit plus haut, de véhiculer des masses importantes de matériaux.

Ce camion 1 est pourvu d'un châssis 10 et de roues 12, ainsi que d'une cabine 11. La benne qui l'équipe est référencée 2.

On a identifié par la flèche f la direction longitudinale générale dudit camion.

Ainsi que le montre plus particulièrement la figure 2, cette benne est dépourvue de parois d'obturation arrière et son fond est incliné, pour palier à cette absence.

La benne 2 est constituée essentiellement d'un assemblage de tôle d'acier d'épaisseur importante et/ou renforcée.

Elle est constituée d'une paroi de fond plane 20, de deux flancs longitudinaux et parallèles 21 qui s'étendent verticalement, et d'une paroi transversale avant 22.

Ces différentes parois sont assemblées les unes aux autres par soudage.

On notera, à la base des deux flancs 21, des surépaisseurs de renfort 210 qui sont fixées à la périphérie du fond 20.

Par ailleurs, la face externe de ces flancs 21 comporte des zones renforcées 211 qui ont un effet rigidificateur.

Le rebord supérieur des flancs 21 est incliné de sorte que lorsque la benne occupe la position représentée à la figure 1, ces rebords s'étendent sensiblement horizontalement.

Dans ce mode de réalisation, la benne comporte, en plus des parois précitées, une paroi supplémentaire 23 appelée "casquette".

Cette paroi supplémentaire 23 se raccorde au bord supérieur 220 de la paroi transversale avant, dans une direction opposée à celle de la paroi de fond.

Cette "casquette", lorsque la benne est en place sur le camion et occupe sa position abaissée, surplombe la cabine 11 précitée.

Sur cette "casquette" et à proximité de sa zone de raccordement à la paroi transversale avant 22 s'étend un rouleau 3 du type de ceux généralement rencontré dans le domaine des convoyeurs à bande sans fin, et utilisé aussi bien en tant que rouleau moteur ou non moteur.

Ce rouleau 3 s'étend transversalement, selon un axe X-X', perpendiculaire à la direction longitudinale du camion et occupe une position parallèle à la face supérieure de la "casquette".

Ce rouleau 3 comporte des paliers d'extrémité 30 guidés dans des supports qui s'élèvent verticalement et qui sont référencés 31.

Il s'agit d'un rouleau fou en rotation sur lui-même, ce qui signifie que dans l'hypothèse où il serait associé à un moteur, alors ce dernier est débrayé, afin que ledit rouleau puisse se mouvoir librement en rotation.

On expliquera plus loin la fonction de ce rouleau.

Toujours en référence à la figure 2, on constate la présence de trois petits rouleaux supplémentaires 4, et qui s'étendent parallèlement au rouleau 3, légèrement en arrière de ce dernier, et pratiquement au niveau de la zone de raccordement de la "casquette" à la paroi 22.

Dans ce cas, on a affaire à trois rouleaux indépendants. Toutefois, on pourrait envisager d'en utiliser un nombre différent, par exemple un, deux ou quatre.

Il s'agit de rouleaux de renvoi non moteur, dont on expliquera plus loin la fonction.

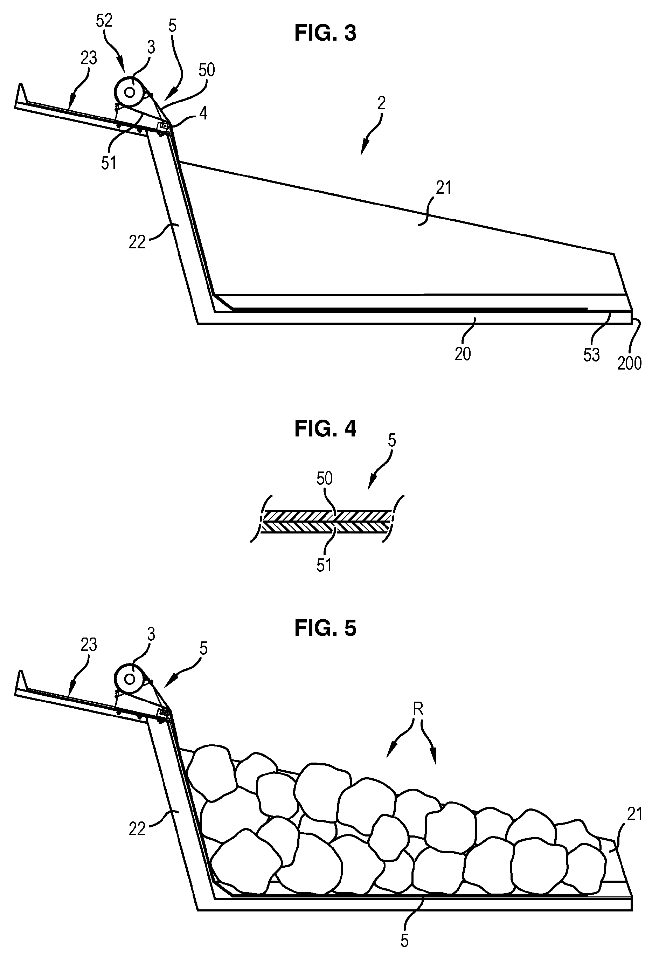

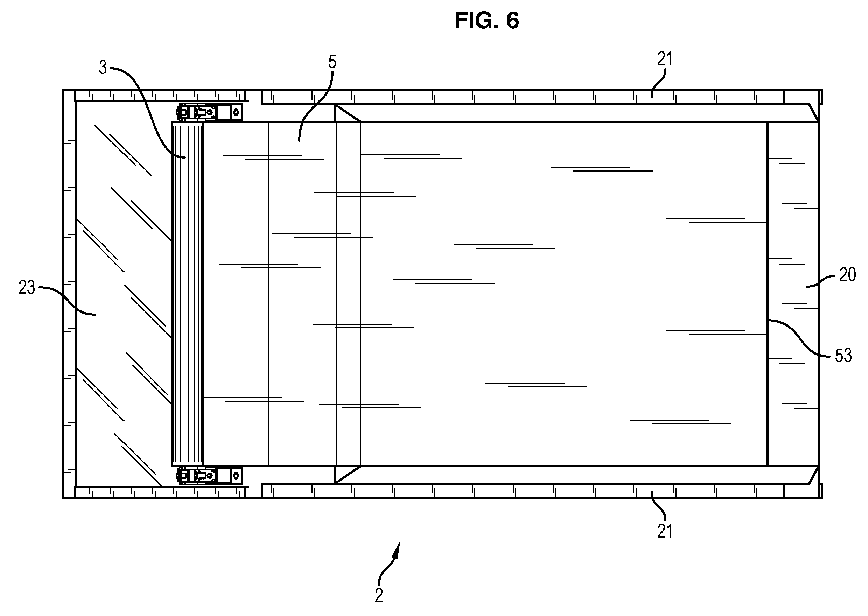

En se reportant maintenant aux figures 3 à 8, on constate que la benne 2 est équipée d'une bande sans fin 5 qui couvre la totalité de la surface de la paroi de fond 20, ou une partie substantielle de celle-ci.

Ainsi que cela est particulièrement visible aux figures 3 et 4, cette bande sans fin contourne le rouleau 3 précité, au niveau d'une de ses extrémités 52, dite "extrémité avant".

On a référencé en conséquence 50 son brin supérieur et par 51 son brin inférieur.

La boucle ainsi formée par la bande autour du rouleau 3, se rejoint dans la zone des rouleaux de renvoi 4, sur lesquels s'appuient les deux brins.

Le reste de la bande, sous l'effet de la gravité, repose contre la paroi 22 ainsi qu'une grande partie de la paroi de fond 20.

On notera toutefois que les dimensions de la bande sont telles que dans cette position de repos où la benne n'est pas chargée, l'extrémité arrière 53 de la bande sans fin 5 est légèrement en retrait de l'extrémité arrière 200 de la paroi de fond 20.

On en expliquera plus loin l'intérêt.

Le matériau utilisé pour constituer la bande sans fin est du type de ceux généralement employés pour des convoyeurs à rouleau moteur.

Un matériau particulièrement adapté est le caoutchouc, synthétique ou naturel, utilisé pur ou en combinaison avec d'autres matériaux amortisseurs.

Avantageusement, ce matériau est utilisé en combinaison avec une armature textile qui est prise entre deux couches de caoutchouc ou à base de caoutchouc, ces deux couches étant respectivement qualifiées d'externe et interne.

On entend par couche externe celle qui est orientée vers l'extérieur et on entend par couche interne celle qui se trouve en regard de la couche interne de l'autre bras.

De préférence, l'état de surface des deux couches est lisse.

Toutefois, on peut envisager que l'état de surface de la couche externe soit pourvu d'éléments aptes à retenir les matériaux.

Toutefois, ceci n'est pas obligatoire.

Dans la position illustrée à la figure 5, on constate un chargement de rochers en place dans la benne. Le déversement de ceux-ci sur le fond 20 génère un certain bruit mais celui-ci est très atténué par les qualités d'amortissement du matériau de la bande sans fin.

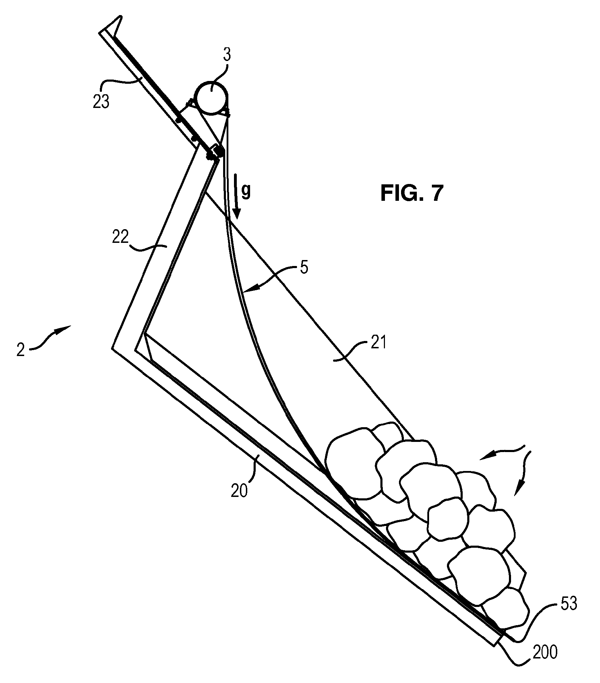

Dès lors que l'on souhaite procéder au relevage de la benne pour la vider par son ouverture arrière, on actionne des vérins ou autres moyens de levage non représentés, pour occuper une position telle que celle apparaissant à la figure 7.

Par gravité, les rochers se déplacent vers l'arrière de la benne et entraînent avec eux le brin supérieur 50 de la bande sans fin, comme le montre la flèche g.

En d'autres termes, la bande sans fin se meut en rotation autour du rouleau 3, entraînant avec elle les rochers R. Dans la pratique, et en utilisant des matériaux particulièrement adaptés, on constate que relativement au déplacement de la bande 5, les rochers R demeurent immobiles, ce qui se traduit par une usure très lente de ladite bande.

Bien entendu, au fur et à mesure du vidage de la benne, comme montré à la figure 7, cette dernière se "décolle" de la paroi 22 pour adopter le profil courbe tel que représenté.

Du fait de cette disposition, l'extrémité 53 glisse vers l'arrière de la benne pour légèrement dépasser de l'extrémité arrière 200 de celle-ci.

Dans l'hypothèse où le déversement des rochers de fait dans une trémie, il est important que la partie de la bande qui dépasse du rebord 200 soit la plus courte possible et l'homme du métier prendra soin de dimensionner la bande sans fin 5 en conséquence.

A titre d'exemple, on peut utiliser, à titre de bande sans fin 5, des bandes de convoyeurs classiques que l'on aura assemblées les unes aux autres pour obtenir la largeur adéquate.

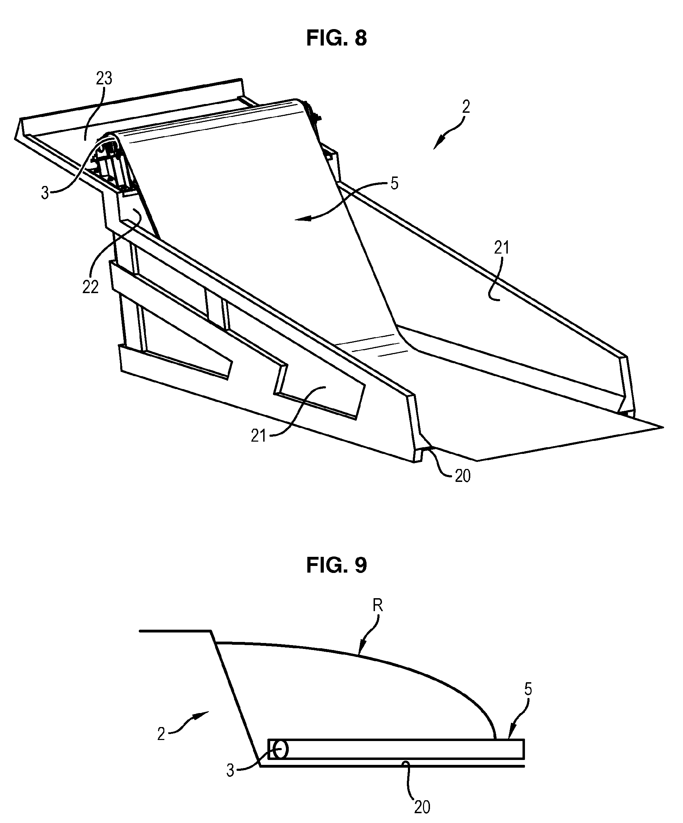

Dans le mode de réalisation de la figure 9, on a affaire à une benne 2 dont la paroi de fond 20 est équipée d'un rouleau 3 similaire à celui décrit plus haut sur lequel est mis en place une bande 5.

Un tel mode de fonctionnement donne satisfaction.

Toutefois, il est moins pratique que le précédent, notamment en termes d'accès au rouleau 3 pour sa réparation.

## Revendications

1. Benne (2) de camion (1), qui comporte au moins une paroi de fond (20), deux flancs longitudinaux (21) et une paroi transversale avant (22), **caractérisée par le fait qu'**elle est pourvue d'un rouleau (3) d'axe transversal, fou en rotation sur lui-même, sur lequel est montée, libre de coulissement, une bande sans fin (5) en matériau amortisseur, qui couvre la totalité de la surface de la paroi de fond (20) ou une partie substantielle de celle-ci.

2. Benne selon la revendication 1, **caractérisée par le fait que** ledit rouleau (3) est monté à proximité immédiate de la paroi de fond (20), dans sa région de raccordement avec la paroi transversale avant (22).

3. Benne selon la revendication 1, **caractérisée par le fait que** ledit rouleau est monté à proximité immédiate du bord supérieur (220) de la paroi transversale avant (22).

4. Benne selon la revendication 1, qui comporte une "casquette", c'est à dire une paroi (23) supplémentaire qui se raccorde au bord supérieur (220) de la paroi transversale avant (22), dans une direction opposée à ladite paroi de fond (20), **caractérisée par le fait que** ledit rouleau (3) est monté sur cette "casquette".

5. Benne selon la revendication 4, **caractérisée par le fait qu'**elle est pourvue, dans la zone de raccordement de la "casquette" (23) à la paroi transversale avant (22), d'au moins un rouleau transversal de renvoi (4), fou en rotation sur lui-même, sur lequel s'appuie et glisse le brin (51) inférieur de ladite bande (5).

6. Benne selon l'une des revendications précédentes, **caractérisée par le fait que** ladite bande sans fin (5) est en caoutchouc ou à base de caoutchouc.

7. Benne selon la revendication 6, **caractérisée par le fait que** ladite bande (5) comporte une armature en matière textile, prise en sandwich entre deux couches de caoutchouc ou à base de caoutchouc, dites externe et interne.

8. Benne selon la revendication 7, **caractérisée par le fait que** l'épaisseur de la couche externe est supérieure à celle de la couche interne.

9. Camion (1) équipé d'une benne (2) selon l'une des revendications précédentes.

10. Camion (1) selon la revendication 9, **caractérisé par le fait que** ladite benne (2) est relevable, de sorte que, lorsque la benne (2) contient un chargement (R), son passage progressif de sa position abaissée de transport, à sa position relevée de vidage provoque le déplacement de ladite bande sans fin (5), qui entraîne avec elle ledit chargement (R).

## Patentansprüche

1. Mulde (2) eines Lastkraftwagens (1), die mindestens eine Bodenwand (20), zwei Längsflanken (21) und eine vordere transversale Wand (22) aufweist, **dadurch gekennzeichnet, dass** sie mit einer Walze (3) mit transversaler Achse ausgestattet ist, die frei um sich selbst dreht, auf welcher frei gleitend ein Endlosband (5) aus Dämpfungsmaterial montiert ist, das die gesamte Fläche der Bodenwand (20) oder einen substantiellen Teil derselben bedeckt.

2. Mulde nach Anspruch 1, **dadurch gekennzeichnet, dass** die Walze (3) in unmittelbarer Nähe der Bodenwand (20) in ihrer Anschlussregion an die vordere transversale Wand (22) montiert ist.

3. Mulde nach Anspruch 1, **dadurch gekennzeichnet, dass** die Walze in ummittelbarer Nähe des oberen Rands (220) der vorderen transversalen Wand (22) montiert ist.

4. Mulde nach Anspruch 1, die eine "Mütze" aufweist, das heißt, eine zusätzliche Wand (23), die sich an den oberen Rand (220) der vorderen transversalen Wand (22) in einer Richtung, die zur Bodenwand (20) entgegengesetzt ist, anschließt, **dadurch gekennzeichnet, dass** die Walze (3) auf dieser "Mütze" montiert ist.

5. Mulde nach Anspruch 4, **dadurch gekennzeichnet, dass** sie in der Anschlusszone der "Mütze" (23) an die vordere transversale Wand (22) mit mindestens einer transversalen Zwischenwalze (4) ausgestattet ist, die frei um sich selbst dreht, auf welcher sich das untere Trumm (51) des Bands (5) abstützt und gleitet.

6. Mulde nach einem der vorangehenden Ansprüche, **dadurch gekennzeichnet, dass** das Endlosband (5) aus Gummi oder auf Gummibasis ist.

7. Mulde nach Anspruch 6, **dadurch gekennzeichnet, dass** das Band (5) eine Armierung aus Textilmaterial aufweist, die sandwichartig zwischen zwei Schichten aus Gummi oder auf Gummibasis, einer sogenannten äußeren und einer sogenannten inneren, eingeschlossen ist.

8. Mulde nach Anspruch 7, **dadurch gekennzeichnet, dass** die Dicke der äußeren Schicht stärker ist als die der inneren Schicht.

9. Lastkraftwagen (1), der mit einer Mulde (2) nach einem der vorangehenden Ansprüche ausgestattet ist.

10. Lastkraftwagen (1) nach Anspruch 9, **dadurch gekennzeichnet, dass** die Mulde (2) derart anhebbar ist, dass, wenn die Mulde (2) eine Ladung (R) enthält, ihr allmählicher Übergang von ihrer abgesenkten Transportposition in ihre angehobene Entleerungsposition zur Verlagerung des Endlosbands (5) führt, das die Ladung (R) mit sich mitnimmt.

## Claims

1. A truck (1) skip (2), which includes at least one bottom wall (20), two longitudinal flanks (21) and a front transverse wall (22), **characterized by** the fact that it is provided with a roller (3) with a transverse axis, idle so as to rotate on itself, on which an endless belt (5) in a shock-absorbing material is mounted so as to slide freely, which covers the whole of the surface of the bottom wall (20) or a substantial portion of the latter.

2. The skip according to claim 1, **characterized by** the fact that said roller (3) is mounted in close proximity to the bottom wall (20) in its region for connection with the front transverse wall (22).

3. The skip according to claim 1, **characterized by** the fact that said roller is mounted in close proximity to the upper edge (220) of the front transverse wall (22).

4. The skip according to claim 1, which includes a "cap", i.e. an additional wall (23) which is connected to the upper edge (220) of the front transverse wall (22), in a direction opposite said bottom wall (20), **characterized by** the fact that said roller (3) is mounted on this "cap".

5. The skip according to claim 4, **characterized by** the fact that it is provided, in the connecting area of the "cap" (23) with the front transverse wall (22), with at least one transverse deflection roller (4), idle so as to rotate on itself, upon which bears and slides the lower strand (51) of said belt (5).

6. The skip according to any of the preceding claims, **characterized by** the fact that said endless belt (5) is in rubber or based on rubber.

7. The skip according to claim 6, **characterized by** the fact that said belt (5) includes a textile material carcass, sandwiched between two so-called external and internal layers of rubber or based on rubber.

8. The skip according to claim 7, **characterized by** the fact that the thickness of the external layer is greater than that of the internal layer.

9. A truck (1) equipped with a skip (2) according to one of the preceding claims.

10. The truck (1) according to claim 9, **characterized by** the fact that said skip (2) may be raised so that, when the skip (2) contains a load (R), its gradual passing from its lowered transport position to its raised emptying position causes displacement of said endless belt (5) which carries away with it said load (R).
